Europäisches Patentamt

European Patent Office

Office européen des brevets

(19)

(11) Veröffentlichungsnummer: **0 065 279**
**B1**

# (12) EUROPÄISCHE PATENTSCHRIFT

(45) Veröffentlichungstag der Patentschrift:
03.09.86

(21) Anmeldenummer: **82104162.1**

(22) Anmeldetag: **13.05.82**

(51) Int. Cl.⁴: **C 08 F 2/08,** C 09 D 3/80

(54) **Verfahren zur Herstellung von stabilen Dispersionen und deren Verwendung als Bindemittel zur Herstellung von Lacken.**

(30) Priorität: **15.05.81 DE 3119347**

(43) Veröffentlichungstag der Anmeldung:
**24.11.82 Patentblatt 82/47**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**DE-A-2 743 969**
**FR-A-2 190 888**
**US-A-3 806 478**

(73) Patentinhaber: **Bollig & Kemper, Vitalisstrasse 114,
D-5000 Köln 30 (DE)**

(72) Erfinder: **Lennartz, Kurt, Bachstrasse 2, D-5042
Erftstadt- Ahrem (DE)**
Erfinder: **Massoné, Matthias, Albert- Kindler-
Strasse 28, D-5000 Köln 40 (DE)**

(74) Vertreter: **von Kreisler, Alek, Dipl.- Chem.,
Deichmannhaus am Hauptbahnhof, D-5000 Köln 1
(DE)**

# 0 065 279

## Beschreibung

Die Erfindung betrifft ein Verfahren zur Herstellung stabiler Dispersionen durch Copolymerisation äthylenisch ungesättigter Monomerer in einer organischen Trägerflüssigkeit in Gegenwart eines Ethylencopolymeren und eines Celluloseesters als Dispersionsstabilisator, sowie die Verwendung dieser Dispersionen als Bindemittel zur Herstellung von Lacken, insbesondere Basislacken mit Metallic-Effekt.

Aus der Patentliteratur sind verschiedene Verfahren zur Herstellung nicht-wässriger Dispersionen bekannt, bei denen ein im wesentlichen in aliphatischen Lösungsmitteln löslicher Stabilisator oder Stabilisatorvorläufer vorgelegt und bei erhöhter Temperatur unter Zuhilfenahme geeigneter Polymerisationsinitiatoren eine Mischung von Vinylmonomeren unter Rühren allmählich zugefügt wird. Hierbei polymerisiert das Monomerengemisch in Form kleiner Schwebeteilchen und es entstehen Dispersionen von Vinylcopolymeren mit sehr hohem Molekulargewicht.

Über geeignete Monomere lassen sich in das Polymergerüst weitere funktionelle Gruppen, vorzugsweise Hydroxyl-, Epoxid- und Carboxylgruppen einbauen, und die so erhaltenen Bindemittel lassen sich durch Kombination mit geeigneten Reaktionspartnern wie alkylierte Aminoformaldehydharze oderpolyisocyanate, zu vernetzten Filmen aushärten, meist bei höherer Temperatur.

So werden in der US-A 3 806 473 polymere Dispersionen offenbart, die durch zelluloseartige Vorstufen stabilisiert werden. Gemeinsames Merkmal der genannten Zelluloseester-Vorstufen ist gemäß der genannten Druckschrift, daß sie in dem verwendeten organischen Medium im wesentlichen löslich oder wenigstens quellbar sein sollen. Die in dem genannten US-Patent beanspruchten Polymerdispersionen enthalten außerdem Polyethylenwachse, die nach Vollendung der Polymerisation zugesetzt werden.

In der FR-A 2 190 888 werden Polymerdispersionen in organischen Lösungsmitteln offenbart, die ebenfalls zur Beschichtung von Oberflächen geeignet sind. Die in dieser Druckschrift genannten Polymerdispersionen enthalten ebenfalls Zelluloseester als Dispersionsstabilisatoren, die in organischen Lösungsmitteln löslich oder zumindest weitgehend quellbar sein müssen. Die Stabilisatoren der vorliegenden Erfindung unterscheiden sich unter anderem in dieser Eigenschaft von den bekannten Stabilisatoren.

Ein gemeinsames Merkmal aller bekannten Verfahren ist die Verwendung eines Dispersionsstabilisators, der die bei der Polymerisation entstehenden Polymerteilchen in der Schwebe halten und deren Zusammenkleben verhindern soll.

Als Stabilisatoren werden außerdem genannt ein aliphatenlösliches alkylierte Melamin-Formaldehydharz (DE-OS 21 51 782), ein aliphatenlösliches Kautschukderivat (DE-PS 12 01 064), ein in Aliphaten-Alkoholgemisch lösliches Acrylharz (DE-OS 22 60 610) oder ein Stabilisatorvorläufer auf der Basis von Vinylestern langkettiger Fettsäuren (DE-AS 15 70 757).

Charakteristisch für alle genannten Beispiele ist, daß die hier verwendeten Stabilisatoren oft die Trocknung verzögern und bereits in "schwachen" Lösungsmitteln wie Aliphaten oder deren Gemischen mit niederen Alkoholen leicht löslich sind und somit ein naß in naß Verarbeiten mit Aromaten enthaltendem Klarlack nicht möglich ist.

Der vorliegenden Erfindung liegt die Aufgabe zugrunde, stabile Dispersionen, insbesondere zur Verwendung als Lackbindemittel zur Formulierung hochwertiger Unieffektlacke und insbesondere Metall-Effektlacke und ein Verfahren zu ihrer Herstellung bereitzustellen, die sich durch schnelle Trocknung an der Luft und die Möglichkeit der nachfolgenden Aushärtung durch Vernetzung bei höherer Temperatur auszeichnen.

Diese Anforderungen werden teilweise erfüllt durch die Verwendung bestimmter Celluloseacetobutyrattypen als Bindemittel. Von den zur Verfügung stehenden Celluloseacetobutyrattypen sind die mittel- und hochviskosen Typen wegen ihrer schnellen Lösungsmittelabgabe und ihrer guten Tragfähigkeit für Metallpigmente, in der Hauptsache Aluminiumbronzen, noch am besten geeignet.

Die ebenfalls verfügbaren niedrigviskosen Celluloseacetobutyratsorten eignen sich weniger für brillante Metalleffektlackierungen, weil sie aufgrund ihres geringen Molekulargewichts keine befriedigende Ausrichtung der Bronzeteilchen bewirken und darüber hinaus geringere Elastizitäts- und Beständigkeitswerte aufweisen. Eine Verbesserung der Elastizität durch Zugabe sog. Weichmacher hat den Nachteil, daß damit die Wetterbeständigkeit und die Ausprägung des Metalleffektes verschlechtert wird.

Der wesentliche Nachteil der hochviskosen Celloseestertypen ist der geringe Festkörpergehalt der daraus hergestellten Lacke, der bei Spritzviskosität lediglich 12 - 15 % beträgt.

Die Erfindung betrifft ein Verfahren zur Herstellung stabiler Dispersionen von Coplymere enthaltend fein verteilten Kunstharzpartikeln in einer organischen Flüssigkeit in Gegenwart eines Stabilisators, der von der organischen Flüssigkeit solvatisiert wird, das Zusammenkleben der dispergierten Teilchen verhindert und die Dispersion stabilisiert, dadurch gekennzeichnet, dass als Stabilisatoren Celluloseester verwendet werden, die in aliphatischen und aromatischen Lösungsmitteln weitgehend unlöslich, in niederen Estern und Ketonen dagegen leicht löslich sind, und als Monomere für das in dispergierter Form in Gegenwart des Celluloseesters hergestellte Copolymere

(A) 2 bis 80 Gew.-% mindestens eines Esters einer $\alpha, \beta$-äthylenisch ungesättigten Carbonsäure mit einem 1 bis 8 Kohlenstoffatomen enthaltenden Alkohol,

(B) mindestens 5 Gew.-% mindestens eines Hydroxiesters einer $\alpha, \beta$-äthylenisch ungesättigten Carbonsäure mit einem 2 bis 5 Kohlenstoffatome enthalteden Diol,

(C) 2 bis 70 Gew.-% mindestens eines copolymerisierbaren Monomeren mit weiteren, zur Vernetzung fähigen funktionellen Gruppen, und

2

(D) 3 bis 80 Gew.-% an weiteren, unter (A) bis (C) nicht aufgeführten copolymerisierbaren Monomeren verwendet werden, wobei die Summe der unter (A) bis (D) aufgeführten Komponenten jeweils loo ergibt, und außerdem der Ausgangsstabilisatormischung vor der Polymerisation ein Ethylenmischpolymerisat in einer Menge von 1 bis 8 Gew.-%, bezogen auf die Gesamtmenge der Dispersion, zugesetzt wird.

Die Erfindung betrifft außerdem die Verwendung derartiger stabiler Dispersionen zur Herstellung von Lacken, insbesondere Metallic-Basislacken.

Die erfindungsgemäßen Dispersionen bzw. Bindemittel weisen die Nachteile der Dispersionen des Standes der Technik nicht auf. Die daraus hergestellten Lacke lassen sich mit einem verhältnismäßig hohen Feststoffgehalt verarbeiten und ergeben Filme, die sehr schnell trocknen und gegen aromatische Kohlenwasserstoffe weitgehend unempfindlich sind.

Als Stabilisatoren eignen sich Celluloseester oder deren Gemische, die eine gute Löslichkeit in Ester- und Keton-Lösungsmitteln aufweisen und in aromatischen Kohlenwasserstoffen praktisch unlöslich sind. Besonders geeignet sind hierfür Celluloseacetobutyrat-Sorten mit einem Acetylgehalt von 2 bis 30 %, einem Butyrylgehalt von 15 bis 55% und Hydroxylgehalten von 0,5 bis 5 % und einer Viskosität von 0,01 bis 40 Sekunden, gemessen nach ASTM-D817-65A und D-1343-56.

Anstelle von Celluloseacetobutyrat kann auch Celluloseacetopropionat eingesetzt werden. Die hierfür infrage kommenden Sorten besitzen Acetylgehalte von 2 bis 5 % und Propionylgehalte von 30 bis 55 % bei einer Viskosität von 0,2 bis 20 Sekunden, gemessen nach ASTM-D-817-65A und D-1343-56.

Nachfolgend werden Beispiele von Stabilisatoren, die für die Herstellung der erfindungsgemässen Dispersionen geeignet sind, aufgezählt. Dabei bedeuten CAB Celluloseacetobutyrat und CAP Celluloseacetopropionat.

Bezeichnung Hersteller Acetylgeh.% Butyrylgeh.% Viskosität dPas

| Bezeichnung | Hersteller | Acetylgeh.% | Butyrylgeh.% | Viskosität dPas |
|---|---|---|---|---|
| CAB-551-0,01 | Eastman | 2,0 | 53 | 0,038 |
| CAB-500-1 | " | 5,0 | 49 | 3,8 |
| CAB-381-0,5 | " | 13,0 | 37 | 1,9 |
| CAB-381-20 | " | 13,0 | 37 | 76,0 |
| CAB-272-3 | " | 20,5 | 26 | 11,4 |
| CAB-171-40 | " | 29,5 | 17 | 152,0 |
| | | | Propionylgeh.% | |
| CAP-504-0,2 | " | 2,5 | 40 | 1,9 |
| CAP-482-20 | " | 2,5 | 46 | 76,0 |

Selbstverständlich lassen sich auch die entsprechenden Produkte anderer Hersteller, wie z.B. die Cellit ± - Typen der Fa. Bayer verwenden.

Als Trägerflüssigkeit und Lösungsmittel für den Stabilisator geeignete Ester sind beispielsweise Methyl-, Äthyl-, Propyl-, Butyl- Amyl- und Hexylacetat, Methoxybutylacetat, Methyl-, äthyl- und Butylglykolacetat sowie Cyclohexylacetat.

Geeignete Ketone sind z.B. Aceton, Methyläthylketon, Methylisobutylketon, Methylisoamylketon, Methyl-n-amylketon, Methoxyhexanon, Cyclohexanon, Methylcyclohexanon und Isophoron.

Weiter können als Verschnittmittel zusätzlich Aromaten zur Verwendung kommen wie z.B. Toluol, Xylol und höhere aromatische Kohlenwasserstoffe mit Siedepunkten von etwa 160 bis 185°C, z.B. Solvesso 100 ± (Hersteller Esso AG).

Als alkoholische Verschnittmittel eignen sich z.B. die radkettigen und verzweigten Formen gesättigter Alkohole wie Methanol, Äthanol, Propanol, Butanol, Pentanol, Hexanol, Octanol, des weiteren cyloaliphatische Alkohole wie Cyclohexanol, Methylcyclohexanol, Tetrahydrofurfurylalkohol, außerdem Monoäther des äthandiols wie z.B. Methyl, äthyl-, Propyl- und Butylglykol sowie die vom Diglykol abgeleiteten entsprechenden Verbindungen.

In dem Lösungsmittelgemisch können außerdem auch Nitroaliphaten wie z.B. 1-Nitroäthan, 1-Nitropropan und 2-Nitropropan enthalten sein.

Aliphatische Kohlenwasserstoffe sind zur Herstellung der erfindungsgemässen Dispersionen nur dann geeignet, wenn sie in so geringen Mengen, die kein Ausflocken des verwendeten Celluloseesterstabilisators bewirken, eingesetzt werden.

Wichtig bei der Auswahl geeigneter Lösungsmittel ist weiterhin, daß deren Siedepunkte über den Zerfalltemperaturen der bei der Polymerisation mitverwendeten radikalbildenden Initiatoren wie z.B. verschiedene organische Peroxide oder Azoisobuttersäuredinitril liegen. Es kommen demnach vornehmlich Lösungsmittel mit Siedepunkt über 70° C zur Anwendung.

Die zur Herstellung des Copolymeren in Betracht kommenden Monomeren werden in vier Gruppen unterteilt. Zur Gruppe (A) gehören die Ester α,β-ungesättigter Carbonsäuren mit 1 bis 8 Kohlenstoffatomen enthaltenden Alkoholen. Geeignete ungesättigte Carbonsäuren sind vorzugsweise Acryl- und Methacrylsäure sowie Crotonsäure, aber auch ungesättigte Dicarbonsäuren wie z.B. Maleinsäure, Fumarsäure und Itaconsäure können in Form ihrer Alkylester zum Einsatz kommen. Bevorzugte Monomere sind Äthyl-, Butyl- und 2-Äthylhexylacrylat, Methyl-, Äthyl-, Butyl-, Isobutyl- und 2-Äthylhexylmethacrylat. Die Komponente (A) ist im Copolymeren mit 2 bis 80, vorzugsweise mit 10 bis 55 Gew.-% enthalten.

Zur Gruppe (B) gehören hydroxylgruppenhaltige Acryl- und Methacrylsäureester wie z.B. 2-

3

Hydroxäthylacrylat, 2-Hydroxypropylacrylat und Butandiolmonoacrylat sowie 2-Hydroxäthylmethacrylat, 2-Hydroxypropylmethacrylat, Polypropylenglykolmonomethacrylat. Alle diese Verbindungen ermöglichen den Einbau von reaktionsfähigen Hydroxylgruppen in das Copolymerisat und somit die spätere Vernetzung beim Einbrennen der Filme. Die Komponenten (B) ist im Copolymeren mit 5 bis 95, vorzugsweise mit 12 bis 66 Gew.-% enthalten.

Vinylmonomere der Gruppe· (C) enthalten neben einer polymerisierbaren Doppelbindung noch weitere reaktionsfähige Gruppen, die zur Vernetzung der aus der Dispersion hergestellten Filme beitragen können, so z.B. Carboxylgruppen wie Acrylsäure, Methacrylsäure, Maleinsäure, Fumarsaure, Itaconsäure, Epoxidgruppen wie Gylcidylacrylat, Glycidylmethacrylat, freie oder verätherte N-Methylolgruppen wie z.B. N-Methylolacrylamid, N-Methylolmethacrylamid und N-Isobutoxymethacrylamid, Amino- oder Amidogruppen wie Acrylamid und Methacrylamid. Die Komponente (C) ist im Copolymeren mit 2 bis 70, vorzugsweise mit 3 bis 30 Gew.-% enthalten.

Die Gruppe (D) umfasst alle unter (A) bis (C) nicht aufgeführten copolymerisierbaren Monomeren, beispielsweise Vinylaromaten wie Styrol, α-Methylstyrol, Vinyltoluol, andere Derivate ungesättigter Carbonsäuren wie z.B. Acrylnitril, Methacrylnitril, Vinylester kurzkettiger Carbonsäuren wie z.B. Vinylacetat, VinylproPionat, Vinylbutyrat. Bevorzugte Vertreter der Gruppe (D) sind Styrol und Acrylnitril, die jeweils allein oder im Gemisch miteinander verwendet werden können. Der Anteil der Komponente (D) im Copolymeren beträgt 3 bis 80, vorzugsweise 20 bis 66 Gew.-%.

Es wurde ferner gefunden, daß es vorteilhaft ist, in Metallic Basislacken Wachse wie Ethylenmischpolymerisate zu verwenden. Dabei hat sich überraschenderweise herausgestellt, daß es wesentlich ist, daß man die Ethylenmischpolymerisate zum Ausgangsgemisch der Monomeren hinzugibt und dann erst die Polymerisation durchführt. Dies hat den Vorteil, daß in der sich nach der Polymerisation ergebenden Dispersion das Polyethylenmischlymerisat nicht ausfällt. Gibt man das Ethylenmischpolymerisat nach der Polymerisation hinzu, fällt es schon nach geringer Temperaturbelastung aus und verursacht bei der Weiterverarbeitung zu Lacken Oberflächenstörungen, wie z. B. Stippen und scheckiges Aussehen.

Eine erfindungsgemäße Dispersion, bei deren Herstellung ein Ethylenmischpolymerisat z. B. ein Ethylenacrylsäuremischpolymerisat oder ein Ethylenpropylenmischpolymerisat oder ein Ethylenvinylacetatmischpolymerisat vor der Polymerisation zugegeben worden ist, hat den weiteren Vorteil, daß bei der Anwendung als Lack vor allem das Anlösen von unteren Schichten und die Wolkenbildung verhindert wird, d. h. daß ein besseres Finish erreicht wird, was auch überraschend ist. Zudem kann der Klarlack nicht in den vorgelegten Basislack eindringen, was auch von Vorteil ist.

Zur Herstellung der erfindungsgemäßen Dispersionen geeignete Ethylencopolymere sind solche von wachsatigem Charkter mit Molekulargewichten zwischen 2 000 und 5 000 u und Schmelzpunkten von 60° C bis 110° C, bestimmt nach ASTM-E 28.

Es können sowohl Ethylencopolymere mit 8 - 29% Vinylacetat, als auch Copolymere mit Acrylsäure, die eine Säurezahl zwischen 30 und 120 aufweisen, zur Verwedung gelangen. Die Einsatzmerge dieser Polymeren, bezogen auf die Dispersion, beträgt 1 - 8%, vorzugsweise 2 - 5 Gewichtsprozent.

Ein besonderes Merkmal der erfindungsgemäßen Dispersionen bzw. Bindemittel ist, daß sich daraus Metallic-Basislacke mit einem Feststoffgehalt (bei Spritzviskosität) von 30% und mehr herstellen lassen. Dieser hohe Feststoffgehalt bei Spritzviskosität war bisher nicht möglich. Diese Lacke weisen außerdem eine hervorragende Beständigkeit gegen Anlösen durch nach kurzer Lufttrocknung darüber gesprizte aromatenhaltige Klarlacke auf.

Die Erfindung wird nachstehend anhand von Beispielen weiter erläutert.

## Beispiel 1

In einem 2-1-Vierhals-Rundkolben, der mit Thermometer, Rührer, Gaseinleitungsrohr und Rückflußkühler versehen ist, werden 324,4 g einer Lösung von 64,2 g Cellulosacetcbutyrat CAB 531-1 in 260,2 g Butylaoetat 98/100, sowie 30,0 g AC® Copolymer 405 und 1,5 g tert.-Butycpercctoat unter Rüren auf 115° C erhitzt.

Zu der vorgelegten Mischung wird mit Hilfe eines geeigneten Tropftrichters unter Durchleitung eines schwachen Stickstoffstroms innerhalb von 4 Stunden eine Mischung von 45,7 g Styrol, 84,5 g Methylmethacrylat, 45,7 g Acrylnitril, 73,7 g 2- Hydroxäthylmethacrylat, 13,0 g Glycidylmethacrylat, 0,5 % tert.-Butylperoctoat und 362,5 g Butylacetat 98/100 % zugetropft und noch eine weitere Stunde auf einer Temperatur von 115° C gehalten. Anschliessend werden 1,5 g tert.-Butylperoctoat in 12,5 g Butylacetat 98/100% qelöst und innerhalb von 20 Minuten eingetragen, Die so erhaltene Dispersion wird noch 2 Stunden bei 1 15° C gehalten und danach unter ständigem Rühren auf Raumtemperatur abgekühlt. Die Viskosität der Dispersion beträgt 215 mPas, gemessen bei 25° C.

**Beispiel 2**

Die Polymerisation wird bei diesem Versuch, wie in Beispiel 1 angegeben, durchgeführt, jedoch wird ein Anteil des Butylacetates duch einen aliphatischen Kohlenwasserstoff ersetzt.

20,0 % Butylacetat 98/100
21,4 % Spezialbenzin
6,4 % Cellit® BP 500
2,5 % AC® Copolymer 540     0,1 % tert.-Butylperoctoat
4,4 % Styrol
8,0 % Methylmethacrylat
4,5 % Acrylnitril
8,6% 2-Hydroximethylmethacrylat
1,3 % Glycidylmethacrylat
0,5 % tert.-Butylperoctoat
20,1 % Butylacetat 98/100
2,0 % Butylacetat
0,2 % tert.-Butylperoctoat
Die Viskosität der so hergestellten Dispersion beträgt 20 mPas

**Beispiel 3**

Bei diesem Beispiel wird ein Anteil des Celluloseacetobutyrats im Monomeren gelöst und während der Polymerisation mit dem Monomergemisch zusammen dosiert.

25,0 % Butylacetat
5,0 % CAB 531-1
0,2 % tert.-Butylperoctoat
2,0 % AC®-Copolymer 540
2,5 % Styrol
7,0 % Methylmethacrylat
6,0 % Acrylnitril
7,0 % Hydroximethylmethacrylat
2,0 % Glycidylmethacrylat
0,5 % tert.-Butylperoctoat
35,0 % Butylacetat
4,0 % CAB 5oo-1
0,2 % tert.-Butylperoctoat
3,6 % Xylol
Die Viskosität der Dispersion beträgt 60 mPas, gemessen bei 25°C.

**Beispiel 4**

Bei diesem Beispiel wird das gesamte Celluloseacetobutyrat im Monomerengemisch gelöst.

15,0 % Butylacetat
0,2 % tert.-Butylperoctoat
1,5 % AC®-Copolymer 540
6,6 % Butylacetat
5,5 % Methylmethacrylat
5,7 % Acrylnitril
8,3 % Hydroxi ethylacrylat
3,0 % Glycidylmethacrylat
7,6 % CAB 50O-1
40,0 % Butylacetat
1,0 % tert.-Butylperoctoat
5,6 % Xylol
Die Viskosität der Dispersion beträgt 8o mPas.

**Beispiel 5**

In einem 2-1-Vierhals-Rundkolben, der mit Thermometer, Rührer, Gaseinleitungsrohr und Rückflußkühler versehen ist, werden 371,? g einer 20%igen Lösung von Celluloseacetobutyrat CAB 50O-1 in Butylacetat 98/100, 25 g Copolymer AC® 340 (Allied Chem.) sowie 1,5 g tert.-Butylperoctoat unter Rühren auf 115°C erhitzt.

Zu der vorgelegten Mischung wird mit Hilfe eines geeigneten Tropftrichters unter Durchleitung eines schwachen Stickstoffstromes innerhalb von 4 Stunden eine Mischung von 50,9 g Styrol, 94,4 g Methylmethacrylat, 50,8 g Acrylnitril, 83,7 g Hydroxyäthylmethacrylat, 13,0 g Glycidylmethacrylat, 0,5 % tert.-Butylperbenzoat und 363,5 g Butylacetat 98/100% zugetropft und noch eine weitere Stunde auf einer Temperatur von 115°C gehalten. Anschließend werden 1,5 g tert.-Butylperoctoat in 14,3 g Butylacetat 98/100% gelöst und innerhalb von 20 Minuten eingetragen. Die so erhaltene Dispersion wird noch 2 Stunden bei 115°C gehalten und danach unter ständigem Rühren auf Raumtemperatur abgekühlt. Die Viskosität der Dispersion beträgt 50 mPas, gemessen bei 25°C.

**Patentansprüche**

1. Verfahren zur Herstellung stabiler Dispersionen von Copolymere enhaltend fein verteilten Kunstharzpartikeln, in einer organischen Flüssigkeit in Gegenwart eines Stabilisators, der von der organischen Flüssigkeit solvatisiert wird, das Zusammenkleben der dispergierten Teilchen verhindert und die Dispersion stabilisiert, dadurch gekennzeichnet, dass als Stabilisatoren Celluloseester verwendet werden, die in aliphatischen und aromatischen Lösungsmitteln weitgehend unlöslich, in niederen Estern und Ketonen dagegen leicht löslich sind, und als Monomere für das in dispergierter Form in Gegenwart des Celluloseesters hergestellte Copolymere

(A) 2 bis 80 Gew.-% mindestens eines Esters einer $\alpha$, $\beta$-äthylenisch ungesättigten Carbonsäure mit einem 1 bis 8 Kohlenstoffatome enthaltenden Alkohol,

(B) mindestens 5 Gew.-% mindestens eines Hydroxiesters einer $\alpha$, $\beta$-äthylenisch ungesättigten Carbonsäure mit einem 2 bis 5 Kohlenstoffatome enthalteden Diol,

(C) 2 bis 70 Gew.-% mindestens eines copolymerisierbaren Monomeren mit weiteren, zur Vernetzung fähigen funktionellen Gruppen, und

(D) 3 bis 80 Gew.-% an weiteren, unter (A) bis (C) nicht aufgeführten copolymerisierbaren Monomeren verwendet werden, wobei die Summe der unter (A) bis (D) aufgeführten Komponenten jeweils l00 ergibt, und außerdem der Ausgangsstabilisatormischung vor der Polymerisation ein Ethylenmischpolymerisat in einer Menge von 1 bis 8 Gew.-%, bezogen auf die Gesamtmenge der Dispersion, zugesetzt wird.

2. Verfahren nach Anspruch 1, dadurch gekennzeichnet, daß als Stabilisator Celluloseacetobutyrat mit einem Acetylgehalt von 2 bis 30 %, einem Butyrylgehalt von 15 bis 55 %, einem Hydroxylgehalt von 0,5 bis 5 % und einer Viskosität (ASTM-D-817-65 A und D-1343-56) von 0,01 bis 40 Sekunden verwendet wird.

3. Verfahren nach Ansprüchen 1 und 2, dadurch gekennzeichnet, daß als Stabilisator Celluloseacetopropionat mit einem Acetylgehalt von 2 bis 5 %, einem Propionylgehalt von 30 bis 55 % und einer Viskosität von 0,2 bis 20 Sekunden (ASTM-D-817-65 A und D-1343-56) verwendet wird.

4. Verfahren nach Ansprüchen 1 bis 3, dadurch gekennzeichnet, daß die als Dispersionsmedium benutzte organische Flüssigkeit aus niederen aliphatischen oder cycloaliphatischen Estern oder Ketonen oder einem Gemisch aus diesen besteht, das gegebenenfalls als Verschnittmittel auch Aromaten und niedere Alkohole enthalten kann, jedoch im wesentlichen frei ist von aliphatischen Lösungsmitteln.

5. Verfahren nach Ansprüchen 1 bis 4, dadurch gekennzeichnet, daß man den bei der Polymerisation vorgelegten Lösungsmitteln bzw. Celluloseesterlösungen vor der Polymerisation 2 bis 5 Gew.-%, bezogen auf die Gesamtmenge der Dispersion, eines Ethylencopolymeren mit Vinylacetat oder Acrylsäure zusetzt, wobei das Molekulargewicht des Copolymeren zwischen 2000 und 5000 D, der Schmelzpunkt nach ASTM-E 28 zwischen 6o und 110°C, der Vinylacetatgehalt 11 bis 29 % und die Säurezahl bei den Acrylsäurecopolymeren 30 bis 120 beträgt.

6. Verwendung der stabilen Dispersionen nach Ansprüchen 1 bis 5 als Bindemittel zur Herstellung von Lacken, insbesondere Metallic-Basislacken.

**Claims**

1. A process for the preparation of stable dispersions of finely divided synthetic resin particles containing copolymers in an organic liquid in presence of a stabilizer which is solvatized by the organic liquid, prevents the dispersed particles from sticking together, and stabilizes the dispersion, characterized in that as stabilizers cellulose esters are employed which are mostly insoluble in aliphatic and aromatic solvents, however readily soluble in lower esters and ketones, and that there are used as monomers for the copolymer prepared in the dispersed state in the presence of the cellulose ester

(A) from 2 to 80 % by weight of at least one ester of an alpha, ß-ethylenically unsaturated carboxylic acid with an alcohol containing from 1 to 8 carbon atoms,

(B) at least 5 % by weight of at least one hydroxyester of an alpha, β-ethylenically unsaturated carboxylic acid with a diol containing from 2 to 5 carbon atoms,

(C) from 2 to 70 % by weight of at least one copolymerizable monomer having further functional groups capable of being cross-linked, and

(D) from 3 to 80 % by weight of further copolymerizable monomers as not mentioned under (A) to (C),

the sum of the components listed under (A) to (D) always amounting to 100 and, besides, an ethylene copolymer having been added in an amount of from 1 to 8 % by weight, based on the total amount of the dispersion, to the initial stabilizer mixture prior to the polymerisation.

2. The process according to claim 1, characterized in that as the stabilizer a cellulose acetobutyrate is employed which has an acetyl content of from 2 to 30 %, a butyryl content of from 15 to 55 %, a hydroxyl content of from 0.5 to 5 %, and a viscosity (ASTM-D-817-65 A and D-1343-56) of from 0.01 to 40 sec.

3. The process according to claims 1 and 2, characterized in that as the stabilizer a cellulose acetopropionat is employed which has an acetyl content of from 2 to 5 %, a propionyl content of from 30 to 55 %, and a viscosity of from 0.2 to 20 sec (ASTM-D-817-65 A and D-1343-56).

4. The process according to claims 1 - 3, characterized in that the organic liquid used as the dispersion medium consits of lower aliphatic or cyclo aliphatic esters or ketones or a mixture thereof which may optionally contain also aromatics and lower alcohols as extenders, which, however, is substantially free of aliphatic solvents.

5. The process according to claims 1 - 4, characterized in that an ethylene copolymer with vinyl acetate or acrylic acid in an amount of from 2 to 5 % by weight, based on the total amount of the dispersion, is added to the solvents charged for the polymerization or to the cellulose ester solutions prior to the polymerisation, the molecular weight of the copolymer being between 2000 and 5000 D, the melting point according to ASTM-E 28 being between 60 and 110°C, the vinyl acetat content being from 11 to 29 %, and the acid value of the acrylic acid copolymers being from 30 to 120.

6. Use of the stable dispersion according to claims 1 to 5 as binders for the preparation of varnishes, more specifically of metallix-basis varnishes.


**Revendications**

1. Procédé pour la préparation de dispersions stables de particules de résine synthétique finement divisées contenant des copolymères dans un liquide organique, en présence d'un stabilisant qui est solvaté par le liquide organique, empêche l'agglomération des particules dispersées et stabilise la dispersion, caractérisé en ce qu'on utilise comme stabilisants des esters cellulosiques qui sont largement insolubles dans les solvants aliphatiques et aromatiques, par contre aisément solubles dans les esters inférieurs et les cétones, qu'on met en oeuvre comme monoméres pour le copolymére préparé en dispersion en présence de l'ester cellulosique

A) 2 à 80% en poids d'au moins un ester d'un acide carboxylique α, β éthyléniquement insaturé avec un alcool contenant 1 à 8 atomes de carbone,

B) au moins 5% en poids d'au moins un hydroxyester d'un acide carboxylique α, β éthyléniquement insaturé avec un diol contenant 2 à 5 atomes de carbone,

C) 2 à 70% en poids d'au moins un monomére copolymérisable doté d'autres groupes fonctionnels aptes à la réticulation et

D) 3 à 80% en poids d'autres monomères copolymérisables non mentionnés sous A) à C), la somme des constituants cités sous A) à D) s'élevant dans chaque cas à 100, et qu'en outre, un copolymère d'éthylène est ajouté au mélange de stabilisant initial avant la polymérisation à raison de 1 à 8% en poids par rapport à la quantité totale de dispersion.

2. Procédé selon la revendication 1, caractérisé en ce que de l'acéto-butyrate de cellulose avec une teneur en acétyle de 2 à 30%, une teneur en butyryle de 15 à 55%, un taux d'hydroxyle de 0,5 à 5% et une viscosité (ASTM-D-817-65 A et D-1343-56) de 0,01 à 40 secondes est utilisé comme stabilisant.

3. Procédé selon les revendications 1 et 2, caractérisé en ce que de l'acéto-propionate de céllulose avec une teneur en acétyle de 2 à 5%, une teneur en propionyle de 30 à 55% et une viscosité de 0,2 à 20 secondes (ASTM-D-817-65 A et D-1343-56) est utilisé comme stabilisant.

4. Procédé selon les revendications 1 à 3, caractérisé en ce que le liquide organique utilisé comme milieu de dispersion est composé d'esters aliphatiques ou cycloaliphatiques inférieurs, de cétones ou d'un mélange de ceux-ci, lequel milieu peut éventuellement contenir comme diluants des aromatiques et des alcools inférieurs, mais est pratiquement exempt de solvants aliphatiques.

5. Procédé selon les revendications 1 à 4, caractérisé en ce qu'on ajoute, avant la polymérisation, aux solvants ou aux solutions d'esters cellulosiques chargés au cours de la polymérisation, 2 à 5% en poids, par rapport à la quantité totale de dispersion, d'un copolymère d'éthylène avec de l'acétate de vinyle ou de l'acide acrylique, moyennant quoi le poids moléculaire du copolymère s'échelonne de 2000 à 5000 D, le point de fusion selon ASTM-E 28 se situe entre 60 et 110°C, la teneur en acétate de vinyle entre 11 et 29% et l'indice d'acide des copolymères d'acide acrylique entre 30 et 120.

6. Utilisation des dispersions stables selon les revendications 1 à 5 comme liants pour la préparation de peintures, notamment de peintures à effet métallisé.